# DEMANDE DE BREVET EUROPEEN

(11) **EP 1 199 864 A1**
(43) Date de publication de la demande: **24.04.2002**
(21) Numéro de dépôt: 01410130.7
(22) Date de dépôt: 19.10.2001
(51) Int. Cl.: H04L 29/06, H04Q 7/38

(54) **Système d'accès securisè à un service**

(30) Priorité: 20.10.2000 FR 0013461
(71) Demandeur: Ascom Monétel SA, 07500 Guilherand-Granges (FR)
(72) Inventeur: Engel, Robert, 3073 Gümligen (CH)
(74) Mandataire: de Beaumont, Michel

(57) **Abrégé**

L'invention concerne un système d'accès à un service contenant un moyen de gestion central (10). La validation de l'accès au service se fait par l'intermédiaire d'un valideur (22) qui recueille d'une part un moyen d'identité (21), indépendant de l'acquisition du droit au service, fourni par un usager, et qui permet d'autre part l'utilisation des données d'une mémoire (40) comprenant les droits dudit usager grâce à un échange de données à distance avec le moyen (10) gérant la mémoire.

## Description

Les systèmes classiques d'accès à un service prévoient généralement une première phase d'acquisition du droit au service. Cette phase comporte dans la majorité des cas le paiement du service puis la délivrance d'un justificatif de paiement, en général sur un support papier, aussi appelé ticket. Alternativement, le droit peut parfois être acquis gratuitement comme par exemple dans le cas d'un client bénéficiant d'un programme de fidélité à un service donné. L'issue reste la même : l'obtention du ticket. Cette première phase précède l'accès au service, le ticket servant alors de preuve du droit d'accès.

Pour de nombreux services, l'électronique a remplacé le papier et on effectue le paiement sur Internet, à l'aide d'un téléphone portable ou d'un PDA (assistant numérique personnel) et le ticket est un ticket électronique, une carte à puce par exemple, dont on charge la mémoire avec les données correspondant au service demandé. Avant l'accès au service, ou ultérieurement pendant l'utilisation du service, une lecture de cette carte est requise.

Le développement de l'électronique permet d'offrir à un utilisateur de service, que nous appellerons "usager" par la suite, plus de flexibilité pour l'achat du service grâce aux possibilités de ventes à distance. Il offre aux opérateurs qui vendent et gèrent le service une plus grande sécurité contre la fraude car un ticket électronique est moins falsifiable qu'un ticket papier, et leur permet d'offrir des contrats complexes tenant compte de leurs besoins et de ceux de leurs clients tout en conservant un traitement automatique et rapide de l'accès au service et une gestion simplifiée de l'exploitation du service.

Dans le cas où le service est un système de transport, on propose aujourd'hui aux usagers des tickets d'accès qui sont des cartes à puce sans contact, contenant en mémoire un ou plusieurs contrats achetés puis chargés dans la mémoire du ticket. L'utilisation du système de transport peut se faire selon un premier système dit "fermé" par une validation du droit de passage avant tout accès au service à l'aide de portillons contenant des lecteurs de cartes à puce pour vérifier et valider le droit de l'usager ou alternativement selon un second système dit "ouvert" par un libre accès au système de transport et en prévoyant un contrôle de l'usager à un moment non déterminé durant le transport par un contrôleur possédant un lecteur portable de cartes à puce.

Cependant, ces systèmes de l'art antérieur possèdent plusieurs inconvénients.

D'abord, même si le paiement du service est simplifié, l'obtention physique du ticket correspondant à l'achat doit se faire soit par la poste, ce qui est long, soit par le rechargement d'un ticket électronique existant, ce qui nécessite un lecteur électronique spécifique ; ce type d'appareil est très cher et peu fiable vis-à-vis de la fraude et donc peu développé chez les usagers particuliers. Dans la majorité des cas, l'usager doit donc se déplacer vers un appareil capable de traiter ce rechargement et subir les files d'attente associées.

De plus, il existe des fraudes consistant à modifier les données sur le ticket électronique voire à le dupliquer : le ticket infalsifiable n'existe pas et l'opérateur doit trouver un compromis entre le coût de tickets comportant des solutions de sécurité et les pertes liées aux fraudes inévitables.

Enfin, il est pénible pour l'usager de devoir toujours posséder un ticket de plus dans son portefeuille et la situation devient préjudiciable lorsqu'il l'oublie ou le perd puisqu'il n'a plus accès au service auquel il a pourtant droit.

Ainsi, un objet de la présente invention est de prévoir un nouveau système de gestion d'accès à un service, permettant notamment d'éviter les inconvénients liés à l'acquisition du ticket.

Un autre objet de la présente invention est de limiter les coûts liés au ticket lui-même et aux fraudes associées.

Enfin, un objet de la présente invention est de supprimer le préjudice subi par l'usager d'un service à cause de l'oubli ou de la perte de son ticket.

Ainsi, la présente invention prévoit un procédé de gestion de l'accès à un service comprenant les phases suivantes :
recueil de données, parmi lesquelles les droits au service pour un usager donné, par un moyen central et mémorisation desdites données dans une mémoire ;
validation de l'accès au service comprenant les étapes suivantes :
   - l'usager fournit un moyen d'identité, indépendant de l'acquisition du droit au service, qui est lu par un valideur ;
   - le valideur a un accès à distance aux données de la mémoire afin de connaître les droits de l'usager identifié et de permettre la validation de l'accès au service.

La présente invention prévoit aussi un système d'accès à un service contenant un moyen de gestion central dans lequel la validation de l'accès au service se fait par l'intermédiaire d'un valideur qui recueille d'une part un moyen d'identité fourni par un usager, et qui permet d'autre part l'utilisation des données d'une mémoire comprenant les droits dudit usager grâce à un échange de données à distance avec le moyen gérant ladite mémoire.

Selon un mode de réalisation de la présente invention, le moyen d'identité est une carte à puce et le valideur un téléphone portable comportant un lecteur de cartes de façon à lire l'identité présente sur le moyen d'identité.

Selon un mode de réalisation de la présente invention, le valideur est apte à lire un moyen d'identité biométrique.

Selon un mode de réalisation de la présente invention, le contenu de la mémoire est accessible par des liaisons de type Internet, comportant éventuellement des accès sécurisés.

Selon un mode de réalisation de la présente invention, la mémoire comporte des données permettant de participer à l'identification de l'usager comme par exemple des photographies d'identité.

Selon un mode de réalisation de la présente invention, le système contient un moyen de localisation du valideur de manière à automatiser au moins partiellement la validation de l'accès au service.

La présente invention prévoit aussi un valideur d'accès à un service comportant un moyen de saisie de l'identité d'un usager, et un moyen de liaison à distance pour accéder aux données de la mémoire centrale associées audit usager.

Selon un mode de réalisation de la présente invention, le valideur comporte un moyen de paiement.

Selon un mode de réalisation de la présente invention, le valideur comporte une mémoire de manière à enregistrer localement partiellement ou entièrement les données de la mémoire centrale, les données locales et centrales restant cohérentes grâce à des communications régulières à distance entre le valideur et le système central.

Selon un mode de réalisation de la présente invention, le valideur est apte à invalider des tickets.

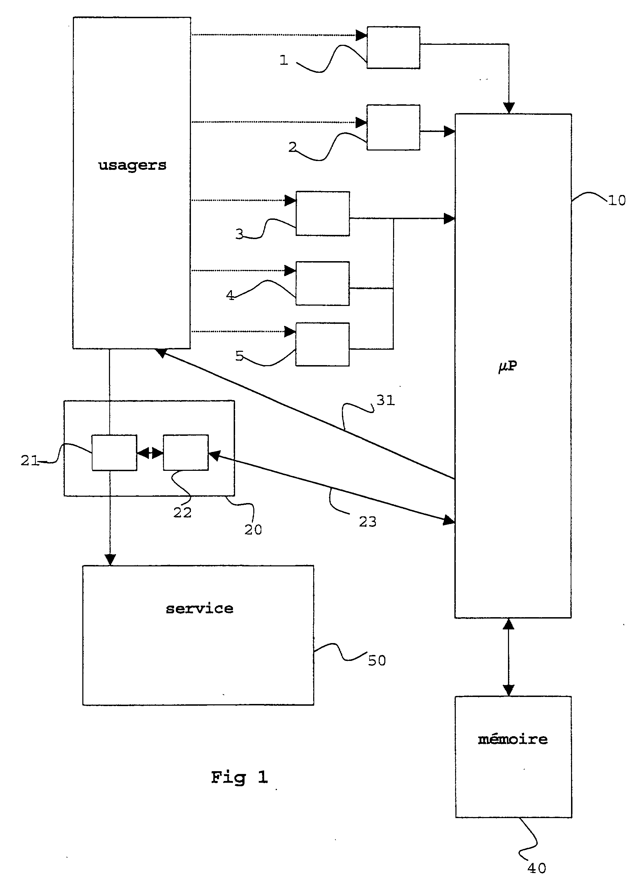

Ces objets, caractéristiques et avantages, ainsi que d'autres de la présente invention seront exposés en détail dans la description suivante de modes de réalisation particuliers faite à titre non-limitatif en relation avec la figure 1 qui représente schématiquement un système de gestion d'accès à un service selon la présente invention.

Pour faciliter la compréhension, la description représente un mode de réalisation d'un système de transport dans lequel un opérateur vend des contrats de transport aux usagers. De même, on se placera dans le cas le plus répandu où l'acquisition du droit au service est acquise après paiement.

Dans ce mode de réalisation, la présente invention prévoit un système centralisé de gestion des paiements 10, constitué d'un système informatique, tel qu'un microprocesseur (µP) en liaison avec une mémoire centralisée 40. Le microprocesseur gère des entrées de données, incluant les achats ou modifications de contrats et les paiements associés, introduites dans le microprocesseur par un opérateur recevant des appels téléphoniques 1, ou dépouillant du courrier 2 ou bien encore directement par réception d'une information de transfert bancaire 3, par information d'un versement de fond à partir d'une carte de crédit 4, par information à partir d'un guichet de paiement automatique 5, par information à partir d'un réseau de communication privé ou public. On prévoit ainsi que l'usager puisse payer son contrat par tout moyen de paiement connu (incluant Internet, un téléphone portable avec lecteur de cartes de crédit etc.) ou susceptible de se développer.

Cette phase de recueil des données par le microprocesseur, sous le contrôle de l'opérateur, peut être entièrement ou partiellement automatisée.

Le microprocesseur 10 écrit ensuite d'une manière automatique toutes les données caractérisant le service acheté par chaque usager dans la mémoire 40. La présente invention ne porte pas sur le contenu de ces données, qui seront similaires à celles recopiées aujourd'hui sur les tickets électroniques et au minimum suffisantes pour effectuer au moins partiellement une validation d'un accès au service.

La sécurité du système est assurée par le microprocesseur 10 qui gère l'ensemble du système et plus particulièrement garantit l'inviolabilité de la mémoire 40 par tout moyen connu de l'homme du métier. Par la suite, nous utiliserons le terme "accès à la mémoire 40" pour simplifier la compréhension de la description mais cela ne devra pas être interprété comme un réel accès physique dans la mémoire 40, ce qui constituerait un danger pour la sécurité du système. Parmi les solutions possibles, les données de la mémoire 40 nécessaires aux différentes phases des traitements décrits ci-après pourront être recopiées puis utilisées au sein du microprocesseur 10 ou envoyées à distance pour des traitements locaux.

L'usager, lors de la validation 20 avant l'accès au service dans les systèmes fermés ou d'une manière équivalente lors d'un contrôle 20 durant l'utilisation du service dans les systèmes ouverts - cette distinction ne sera plus faite et nous utiliserons le terme générique de "validation" pour couvrir les deux modes de fonctionnement - va présenter un moyen d'identité 21 à un appareil de communication à distance 22 qui à travers une liaison 23 va avoir accès aux informations de la mémoire 40 concernant l'usager identifié. On en déduit ainsi si l'usager est en règle ou non. L'appareil 22, qu'on peut aussi appeler valideur, a donc au moins une double fonction : celle d'identification puis celle de communication. Avantageusement, l'appareil est un téléphone portable qui accède aux données de la mémoire 40 par une liaison Internet 23 grâce à une technologie de type WAP et qui comporte un lecteur de carte capable de lire le moyen d'identité 21 sous forme de carte, à puce ou magnétique, présenté par l'usager. L'opération de validation proprement dite consiste à constater passivement un droit de passage pour certains types de contrats, les abonnements périodiques par exemple, ou à invalider au moins partiellement un contrat lorsqu'il s'agit d'un contrat à l'unité. Le microprocesseur 10 gère toutes les opérations de validation.

L'opérateur du système pourra choisir une solution compatible avec un système existant et utiliser une carte à puce contenant l'identité de l'usager de manière sécurisée, par exemple une carte de crédit, de manière à utiliser cette carte comme moyen d'identité. Une telle carte acquiert ainsi une deuxième fonction qui est une fonction de carte d'identité électronique. Une telle solution répond bien au problème posé car la carte de crédit est en général en permanence dans le portefeuille de l'usager.

Toutefois, l'usager peut l'avoir oubliée. Ainsi, on prévoit une solution flexible, acceptant plusieurs types d'identification, et notamment comme ultime recours, la possibilité d'entrer manuellement dans l'appareil 22 l'identité de l'usager sur présentation de sa carte d'identité par exemple, associée à un mot de passe, ou l'adresse Internet menant à son compte dans la mémoire 40. Bien sûr, la solution automatique et rapide décrite ci-dessus est privilégiée.

Une solution alternative ou complémentaire est basée sur la lecture d'un moyen d'identité 21 biométrique comme par exemple l'empreinte digitale de l'usager, son iris, son image ou tout autre moyen pour l'identifier sans qu'il ait à fournir le moindre support.

L'identification de l'usager permet un accès direct et sécurisé vers les données le concernant dans la base de données 40 ; une validation du droit de l'usager se fait alors manuellement par un contrôleur manipulant l'appareil 22 ou alternativement de manière automatique, en ajoutant une fonction de localisation à l'appareil 22, de type GPS par exemple ou simplement basée sur une technique de localisation par GSM, permettant au microprocesseur 10 de comparer ces données de localisation avec les données du contrat de l'usager identifié de manière à en conclure automatiquement son droit d'accès au service ; ce traitement est possible dès qu'à un endroit donné ne correspond qu'un seul type de service voire plusieurs services au même tarif. La fonction de vérification de l'identité peut aussi être au moins partiellement déportée dans le microprocesseur à distance, l'appareil 22 se contentant alors de lire et transmettre les informations.

Dans le cas d'une validation manuelle effectuée à l'aide d'un appareil 22 par un contrôleur, on pourra prévoir pour augmenter la sécurité et alléger les exigences sur le moyen d'identité 21, d'associer une photographie d'identité aux données de la mémoire 40, ce qui permettra au contrôleur de vérifier visuellement que la personne face à lui est bien la bonne.

De manière complémentaire, l'appareil 22 comporte une fonction de paiement, grâce à un lecteur de cartes de crédit ou de porte monnaie électronique, de manière à permettre aux usagers en infraction de régulariser leur situation immédiatement.

On prévoit aussi que tout usager a un accès personnel 31 aux données le concernant dans la mémoire 40 dans un mode de lecture uniquement. Cet accès peut se faire grâce à un téléphone portable possédant un lecteur de carte pour lire automatiquement l'identité du propriétaire de la carte et en retour offrant un accès de type WAP aux informations correspondantes, d'une manière semblable à l'opération de validation 20 précédemment décrite. On prévoit aussi l'utilisation de tout accès Internet existant avec un filtre du type mot de passe, numéro d'identification particulier, etc. de manière à garantir la confidentialité des données.

Cette confidentialité est souhaitable mais pas indispensable ; en effet, il est suffisant pour obtenir une bonne sécurité du système global de définir une forte sécurité soit lors de la phase de vérification de l'identité 21 de l'usager soit lors des accès aux données de la mémoire 40.

Dans toutes les phases susmentionnées, l'accès aux données de la mémoire 40 peut se faire en utilisant les différents moyens de communication à distance existants, par exemple à l'aide d'un téléphone portable en utilisant la voix, WAP ou SMS pour transmettre les données. Une flexibilité du système peut être obtenue en ajoutant une mémoire à l'appareil 22 contenant partiellement des données de la mémoire 40, remises à jour régulièrement, pour éviter une liaison systématique lors d'une opération de validation. Par exemple, on peut choisir de mettre dans cette mémoire locale des données concernant des usagers qui selon des statistiques seront souvent amenés à effectuer des opérations de validation sur ce valideur spécifique, et qui ont un contrat de type abonnement mensuel, ne nécessitant donc aucune opération de type invalidation d'un ticket. Il est aussi possible d'informer certains valideurs, comme ceux installés dans une gare de départ dans un système fermé ou les appareils des contrôleurs d'une ligne de transport spécifique dans les systèmes ouverts, de l'existence des tickets les concernant, de manière à traiter leur validation localement avant de transmettre au microprocesseur 10 par une liaison par lots la liste des tickets invalidés.

Un avantage de la présente invention est de permettre à l'usager de profiter de tous les modes modernes d'achat à distance, et de disposer d'un accès à un service aussitôt le paiement effectué de manière automatique ou quasi-automatique.

Un autre avantage d'un système selon l'invention est qu'il convient à tout type de contrat : il peut s'agir d'un ticket correspondant à un seul voyage, qui sera invalidé lors de la première validation, ou d'un abonnement mensuel pour un certain voyage.

D'autre part, la présente invention élimine les tickets habituels et tous les inconvénients associés et mentionnés précédemment. L'usager se contente de prouver son identité pour utiliser le service, par un moyen simple, rapide et sûr, et surtout indépendant de la preuve d'un droit d'accès telle une preuve du paiement du service considéré ; cette solution supprime donc totalement le ticket de l'art antérieur.

On notera que cette solution va à l'encontre de l'art antérieur dont la tendance consiste à proposer aux usagers des tickets électroniques de plus en plus complexes, contenant de plus en plus d'informations, et de procédés de sécurité contre la fraude.

Un avantage de la présente invention est aussi de permettre la vérification du droit de l'usager à tout moment et en tout lieu.

On notera que la présente invention est particulièrement adaptée aux systèmes ouverts dans lesquels les contrôles ne sont pas systématiques et dans lesquels le temps du contrôle est un facteur moins sensible que dans les systèmes fermés.

## Revendications

1. Procédé de gestion de l'accès à un service (50) comprenant les phases suivantes :
recueil de données, parmi lesquelles les droits au service pour un usager donné, par un moyen central (10) et mémorisation desdites données dans une mémoire (40) ;
validation (20) de l'accès au service comprenant les étapes suivantes :
- l'usager fournit un moyen d'identité (21), indépendant de l'acquisition du droit au service, qui est lu par un valideur (22);
- le valideur (22) a un accès à distance (23) aux données de la mémoire (40) afin de connaître les droits de l'usager identifié et de permettre la validation de l'accès au service (50).

2. Système d'accès à un service contenant un moyen de gestion central (10), **caractérisé en ce que** la validation de l'accès au service se fait par l'intermédiaire d'un valideur (22) qui recueille d'une part un moyen d'identité (21) fourni par un usager, et qui permet d'autre part l'utilisation des données d'une mémoire (40) comprenant les droits dudit usager grâce à un échange de données à distance avec le moyen (10) gérant ladite mémoire.

3. Système selon la revendication 2, **caractérisé en ce que** le moyen d'identité (21) est une carte à puce et le valideur (22) un téléphone portable comportant un lecteur de cartes de façon à lire l'identité présente sur le moyen d'identité (21).

4. Système selon la revendication 2, **caractérisé en ce que** le valideur (22) est apte à lire un moyen d'identité biométrique.

5. Système selon la revendication 2, **caractérisé en ce que** le contenu de la mémoire (40) est accessible par des liaisons de type Internet, comportant éventuellement des accès sécurisés.

6. Système selon la revendication 2, **caractérisé en ce que** la mémoire (40) comporte des données permettant de participer à l'identification de l'usager comme par exemple des photographies d'identité.

7. Système selon la revendication 2, **caractérisé en ce qu'**il comprend un moyen de localisation du valideur (22) de manière à automatiser au moins partiellement la validation de l'accès au service.

8. Valideur d'accès (22) à un service **caractérisé en ce qu'**il comporte un moyen de saisie de l'identité (21) d'un usager, et un moyen de liaison à distance pour accéder aux données de la mémoire centrale (40) associées audit usager.

9. Valideur selon la revendication 8, **caractérisé en ce qu'**il comporte un moyen de paiement.

10. Valideur selon la revendication 8, **caractérisé en ce qu'**il comporte une mémoire de manière à enregistrer localement partiellement ou entièrement les données de la mémoire centrale (40), les données locales et centrales restant cohérentes grâce à des communications régulières à distance entre le valideur (22) et le système central (10).

11. Valideur selon la revendication 10, **caractérisé en ce qu'**il est apte à invalider des tickets.
